Europäisches Patentamt

European Patent Office

Office européen des brevets

(11) Numéro de publication: **0 385 901**
**A1**

## (12) DEMANDE DE BREVET EUROPEEN

(21) Numéro de dépôt: **90450006.3**

(22) Date de dépôt: **02.03.90**

(51) Int. Cl.⁵: **B01J 2/00, B01F 5/20, C05G 3/00**

(30) Priorité: **03.03.89 FR 8903003**

(43) Date de publication de la demande:
**05.09.90 Bulletin 90/36**

(84) Etats contractants désignés:
**AT BE CH DE DK ES GB GR IT LI LU NL SE**

(71) Demandeur: **SOCIETE ANONYME DITE MG ENTREPRISE**
**Rue de Brossard**
**F-47110 Sainte Livrade(FR)**

Demandeur: **SARL DITE PHOSYN**
**Rue des Anciens Combattants**
**F-32500 Fleurance(FR)**

(72) Inventeur: **Gillet, Marcel**
**"Calonges"**
**F-47440 Casseneuil(FR)**

(54) Dispositif d'impregnation en continu par pulverisation de produits granulaires et produit ainsi obtenu.

(57) L'objet de l'invention concerne un dispositif d'imprégnation en continu par pulvérisation de produits granulaires et un produit ainsi obtenu, caractérisé en ce qu'il est constitué d'une gaine ou conduit d'axe vertical, ouvert à son extrémité inférieure (1) et muni à sa partie supérieure d'un orifice (2) d'introduction des produits granulaires à imprégner, d'un dispositif de chicanes (3 à 5) disposé à l'intérieur du conduit, à l'aplomb dudit orifice (2) et agencé pour contraindre lesdits produits à s'écouler par gravité en nappe tubulaire verticale (N) à l'intérieur du conduit (1) et d'une pluralité d'injecteurs (6) fixés sur la paroi du conduit, dirigés vers son centre et susceptibles de projeter sous forme d'un brouillard un produit liquide ou légèrement pâteux de traitement ou d'addition.
  - Application notamment à l'imprégnation d'engrais chimiques granulés.

EP 0 385 901 A1

## DISPOSITIF D'IMPREGNATION EN CONTINU PAR PULVERISATION DE PRODUITS GRANULAIRES ET PRODUIT AINSI OBTENU

La présente invention a trait à un dispositif destiné à imprégner en continu des produits sous forme granulaire par pulvérisation de produits liquides.

L'invention s'applique plus particulièrement à l'imprégnation d'engrais chimiques granulés par des produits liquides tels que des oligo-éléments, des désherbants, des insecticides, etc... mais elle peut s'appliquer également d'une manière générale à la pulvérisation de tous autres produits liquides ou légèrement pâteux sur tous supports granuleux tels que céréales, graines diverses, granules plastiques ou chimiques, etc...

L'objet de l'invention est un dispositif d'imprégnation par pulvérisation de produits granulaires ou analogues, caractérisé en ce qu'il est constitué d'une gaine ou conduit d'axe vertical, ouvert à son extrémité inférieure et muni à sa partie supérieure d'un orifice d'introduction des produits granulaires à imprégner, d'un dispositif de chicanes disposé à l'intérieur du conduit, à l'aplomb dudit orifice et agencé pour contraindre lesdits produits à s'écouler par gravité en nappe tubulaire verticale à l'intérieur du conduit et d'une pluralité d'injecteurs fixés sur la paroi du conduit, dirigés vers son centre et susceptibles de projeter sous forme d'un brouillard un produit liquide ou légèrement pâteux de traitement ou d'addition.

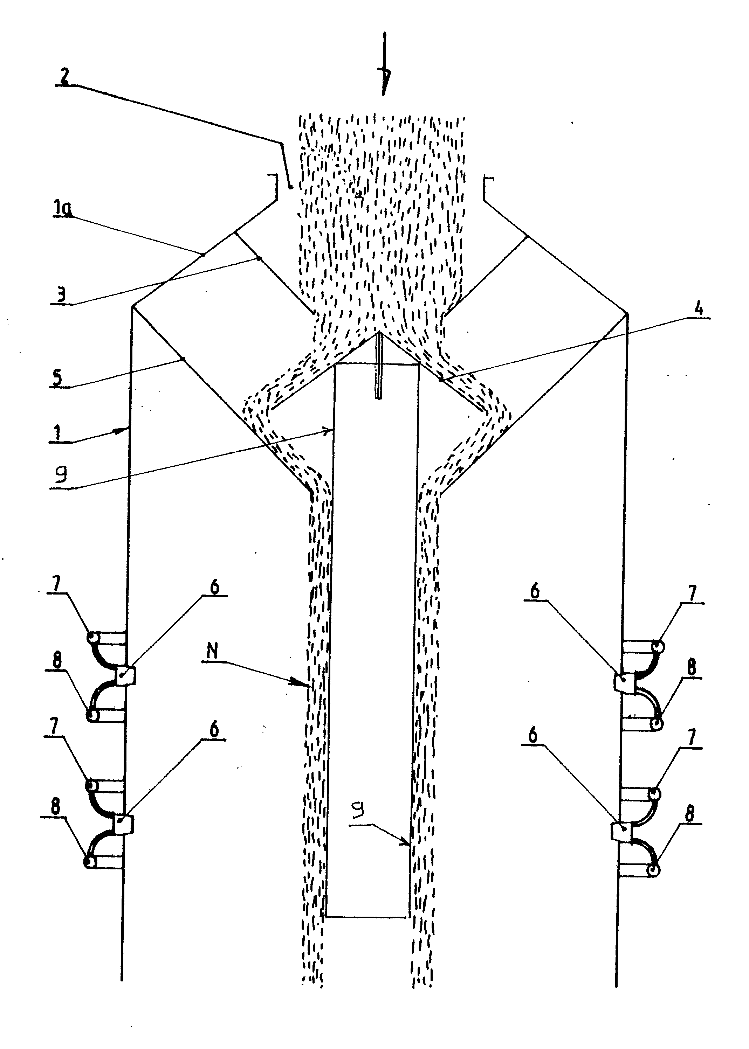

D'autres caractéristiques et avantages ressortiront de la description qui va suivre d'un mode de réalisation du dispositif de l'invention, description donnée à titre d'exemple uniquement et en regard du dessin annexé sur lequel la figure unique représente schématiquement en coupe verticale axiale un imprégnateur conforme à l'invention.

Sur cette figure unique on a représenté en 1 une gaine ou conduit, de préférence en acier inoxydable ou en matériau anti-corrosif, matériau composite par exemple, de forme générale cylindrique, par exemple de 700 mm de diamètre et d'une hauteur de 1000 mm.

Ce conduit est ouvert à son extrémité inférieure et comporte une partie supérieure 1a de forme tronconique délimitant en son centre un orifice circulaire 2 d'introduction des produits granulaires à traiter.

A l'intérieur, et en partie supérieure du conduit 1, est agencé, à l'aplomb de l'orifice 2, un système de chicanes dont le rôle est de répartir régulièrement les produits granulaires en les contraignant à s'écouler par gravité dans le conduit sous la forme d'une nappe tubulaire verticale. Dans le mode de réalisation représenté ce système de chicanes est constitué de trois déflecteurs coniques disposés successivement et coaxialement à l'axe vertical du conduit 1. Ces trois déflecteurs sont, à partir de l'orifice 2, une plaque déflectrice 3 en forme d'entonnoir, une plaque déflectrice conique 4 dont la pointe est dirigée vers l'orifice 2 et une plaque déflectrice 5 en forme d'entonnoir.

Les plaques 3, 4, 5 sont solidaires de la paroi du conduit 1 et ainsi agencées qu'elles dirigent l'une vers l'autre le flux de produits granulaires, la dernière (plaque 5) obligeant le flux conique canalisé par elle à se déverser suivant une nappe sensiblement tubulaire et verticale N.

L'angle d'inclinaison des plaques 3, 4 et 5 peut varier. Il est par exemple de l'ordre de 45°.

Dans l'espace intérieur au conduit, entre la troisième chicane 5 et l'extrémité inférieure, la nappe tubulaire d'axe vertical N formée par le produit qui s'écoule par gravité traverse un brouillard engendré par une pluralité d'injecteurs 6 dirigés vers le centre du conduit, de préférence régulièrement distribués sur la paroi interne du conduit 1, par exemple décalés angulairement et suivant des cercles successifs à différentes hauteurs.

Les injecteurs 6 sont reliés, d'une part, à une source sous pression (non représentée) de produit liquide ou légèrement pâteux à pulvériser, par l'intermédiaire d'un système de canalisation 7 et, d'autre part, à une source d'air sous pression (non représentée) par l'intermédiaire d'un système de canalisation 8.

Le produit liquide ou légèrement pâteux est éventuellement maintenu sous agitation dans son réservoir et poussé dans le réseau 7 par une pompe à vis ou tout autre moyen. Vue régularisation de débit permet de contrôler le dosage.

Un tel dispositif permet d'imprégner de manière économique, simple, fiable et remarquablement régulière, n'importe quel flux de produit granulaire, à l'aide de n'importe quel liquide, ou même de produit légèrement pâteux, de traitement ou d'addition.

Il est à noter qu'entre deux séquences d'imprégnation le circuit d'air comprimé (8) peut délivrer un débit d'air réduit sur les injecteurs 6 évitant les risques de bouchage.

Par ailleurs, le nettoyage du conduit 1 s'effectue facilement en alimentant le réseau 7 en eau, diluant, solvant, selon le type de produit pulvérisé.

La nappe N imprégnée au passage au droit des injecteurs 6 est recueillie en dessous du conduit 1 par tout dispositif de stockage ou de reprise par un moyen quelconque fonctionnant en continu tel que vis sans fin, transporteur à bande, etc...

Suivant une variante de réalisation le dispositif peut être muni d'un guide tubulaire 9 disposé coaxialement au conduit 1 en étant fixé par exemple à la plaque déflectrice 4 et agencé à l'intérieur de la nappe N dont il parfait la forme tubulaire.

Un tel guide 9 permet également de limiter la portée des jets des injecteurs 6 qui, ainsi, ne traversent pas de part en part la nappe N.

L'intérieur du conduit 1 reste plus propre et le produit de pulvérisation excédentaire qui se dépose sur la paroi externe du guide 9 est évacué au fur et à mesure par la friction des granules de la nappe N.

Enfin, l'invention n'est évidemment par limitée au mode de réalisation représenté et décrit ci-dessus mais en couvre au contraire toutes les variantes notamment en ce qui concerne la forme et l'agencement des organes de chicanes disposés sous l'orifice 2 et destinés à canaliser les produits granulaires sous la forme d'une nappe tubulaire N à paroi relativement mince à l'intérieur du conduit 1, dans lequel est pulvérisé, par tous moyens appropriés, un brouillard d'imprégnation.

**Revendications**

1. Dispositif d'imprégnation en continu par pulvérisation de produits granulaires ou analogues, caractérisé en ce qu'il est constitué d'une gaine ou conduit d'axe vertical, ouvert à son extrémité inférieure (1) et muni à sa partie supérieure d'un orifice (2) d'introduction des produits granulaires à imprégner, d'un dispositif de chicanes (3 à 5) disposé à l'intérieur du conduit, à l'aplomb dudit orifice (2) et agencé pour contraindre lesdits produits à s'écouler par gravité en nappe tubulaire verticale (N) à l'intérieur du conduit (1) et d'une pluralité d'injecteurs (6) fixés sur la paroi du conduit, dirigés vers son centre et susceptibles de projeter sous forme d'un brouillard un produit liquide ou légèrement pâteux de traitement ou d'addition.

2. Dispositif suivant la revendication 1, caractérisé en ce que ledit dispositif de chicanes est constitué successivement à partir dudit orifice (2) et coaxialement à ce dernier, d'une plaque déflectrice (3) en entonnoir, d'une plaque déflectrice conique (4) et d'une plaque déflectrice en entonnoir (5).

3. Dispositif suivant la revendication 1 ou 2, caractérisé en ce que les injecteurs (6) sont régulièrement distribués, décalés angulairement et suivant des cercles à hauteurs différentes.

4. Dispositif suivant l'une des revendications 1 à 3, caractérisé en ce que les injecteurs sont reliés, d'une part, à un système de canalisation (7) d'amenée du produit à pulvériser et, d'autre part, à un système de canalisation (8) d'amenée d'air comprimé.

5. Dispositif suivant l'une des revendications 1 à 4, caractérisé en ce qu'il comporte, en outre, un guide tubulaire (9) disposé à l'intérieur de la nappe (N).

6. Produit granulaire imprégné par pulvérisation d'un produit liquide obtenu avec le dispositif selon l'une quelconque des revendications 1 à 5.

7. Produit selon la revendication 6, caractérisé en ce que la partie granulaire est constituée par des engrais chimiques et en ce que la partie liquide pulvérisée est constituée par des oligo-éléments.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 323 314  (M. KAISER-WIRZ)<br>* Document en entier *<br>--- | 1,3,6 | B 01 J    2/00<br>B 01 F    5/20<br>C 05 G    3/00 |
| X | EP-A-0 076 472  (CLAUDIUS PETERS AG)<br>* Document en entier * | 1,6 | |
| A | --- | 3 | |
| A | GB-A-2 053 708  (MACHINENFABRIK KOPPERN GmbH & CO. KG)<br>--- | | |
| A | US-A-3 198 655  (KURT GISIGER)<br>----- | | |

DOMAINES TECHNIQUES RECHERCHES (Int. Cl.5)

B 01 J
B 01 F
C 05 G

**Le présent rapport a été établi pour toutes les revendications**

| Lieu de la recherche | Date d'achèvement de la recherche | Examinateur |
|---|---|---|
| LA HAYE | 12-04-1990 | PYFFEROEN K. |